# FASCICULE DE BREVET EUROPEEN

(11) **EP 2 066 598 B1**
(45) Date de publication et mention de la délivrance du brevet: **24.10.2012**
(21) Numéro de dépôt: 07803612.6
(22) Date de dépôt: 27.09.2007
(51) Int. Cl.: C04B 37/00

(54) **PROCEDE D'ASSEMBLAGE DE PIECES EN CERAMIQUE REFRACTAIRE PAR FRITTAGE A CHAUD AVEC CHAMP ELECTRIQUE PULSE (" SPS ")**
VERFAHREN ZUM ZUSAMMENBAUEN VON TEILEN AUS FEUERFESTER KERAMIK MITTELS SPS (SPARK PLASMA SINTERING)
METHOD FOR ASSEMBLING REFRACTORY CERAMIC PARTS BY MEANS OF SPARK PLASMA SINTERING (SPS)

(30) Priorité: 27.09.2006 FR 0653973
(43) Date de publication de la demande: 10.06.2009
(73) Titulaire: Commissariat à l'Énergie Atomique et aux Énergies Alternatives, 75015 Paris (FR)
(72) Inventeur: ALLEMAND, Alexandre, F-33000 Bordeaux (FR); AUDUBERT, Fabienne, F-84160 Cadenet (FR)
(74) Mandataire: Ilgart, Jean-Christophe
(86) Numéro de dépôt international: PCT/EP2007/060258
(87) Numéro de publication internationale: WO 2008/037765

(56) Documents cités:
- EP-A1- 1 162 022

## Description

L'invention a trait à un procédé d'assemblage de pièces en céramique réfractaire, par frittage à chaud avec champ électrique pulsé (« Spark Plasma Sintering » ou SPS en anglais).

Le domaine technique de l'invention peut être défini de manière générale comme celui de l'assemblage de céramiques, plus précisément de céramiques réfractaires.

Par céramiques réfractaires, on entend de manière générale des céramiques qui possèdent des températures de frittage supérieures à 1300°C.

Du fait de leur caractère réfractaire et fragile, les céramiques sont des matériaux difficiles à mettre en forme.

Les moyens d'élaboration actuels sont relativement longs et coûteux, dès qu'il s'agit de fritter des céramiques très réfractaires telles que des carbures ou nitrures.

Il est généralement difficile de fabriquer des pièces de forme complexe avec des céramiques et notamment des céramiques réfractaires.

Il est donc souvent préférable de fabriquer des structures à partir d'éléments ou pièces en céramique de forme simple, puis d'assembler ces éléments pour réaliser la structure finale, de forme plus complexe.

Du fait des températures élevées, voisines par exemple de 1000°C et plus, mises en oeuvre dans les applications des céramiques telles que le carbure de silicium, l'assemblage de ces céramiques par collage avec des produits organiques est exclu.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques.

En effet, lors d'un chauffage local, le choc thermique va entraîner une rupture brutale de la céramique avant un éventuel début de fusion.

En conséquence, le soudage par diffusion en phase solide, l'assemblage-frittage, et le brasage réactif sont actuellement les techniques les plus courantes pour réaliser des assemblages réfractaires de céramiques.

Le soudage par diffusion en phase solide ainsi que l'assemblage-frittage présentent le désavantage d'être contraignants du point de vue de leur mise en oeuvre.

Pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).

Dans le cas de l'assemblage-frittage, les mêmes problèmes demeurent (forme des pièces, complexité de mise en oeuvre) avec en plus la nécessité de contrôler le frittage d'une poudre d'apport à intercaler entre les deux matériaux à assembler.

Ces deux techniques nécessitent en outre l'utilisation de paliers de longue durée (une à plusieurs heures) à haute température puisque les processus mis en jeu font intervenir la diffusion à l'état solide ; ces longues durées pourraient favoriser le grossissement des grains des alliages réfractaires et les fragiliser.

Le brasage réactif est une technique peu coûteuse, facile de mise en oeuvre, qui est actuellement la plus couramment utilisée. Des pièces de forme complexe peuvent être réalisées en faisant du brasage capillaire et les opérations se limitent à placer le métal d'apport entre ou à proximité du joint et à faire fondre la brasure.

Ainsi à l'heure actuelle, le procédé le plus connu pour l'assemblage de céramiques réfractaires telles que le SiC est le procédé dit procédé « BRASIC » du Commissariat à l'Energie Atomique.

Ce procédé, décrit notamment dans les documents [1], [2], [3] et [4], permet l'assemblage par brasage réfractaire de pièces en céramique réfractaire, par exemple en carbure de silicium.

On met en contact les pièces à assembler avec une brasure intermétallique et on chauffe l'ensemble formé par les pièces et la brasure à une température de brasage égale à la température de fusion de la brasure afin de former un joint réfractaire. Ce procédé qui a été développé à l'échelle industrielle présente cependant certaines limitations :
i) la température d'utilisation de l'ensemble brasé ne doit pas dépasser la température de fusion de la brasure ;
ii) la brasure correspond à une seconde phase qui peut dans certains cas s'avérer rédhibitoire pour l'utilisation du matériau, et par exemple provoquer l'incompatibilité neutronique de la brasure ;
iii) la nature de la brasure est intrinsèquement lié à la nature du matériau à braser, c'est-à-dire que pour chaque céramique à assembler il faut développer un nouveau type de brasure spécifique, ce qui peut entraîner une période de développement longue et coûteuse.

Par ailleurs, on connaît la technologie du frittage à chaud avec champ électrique pulsé (« Spark Plasma Sintering » « SPS » en anglais). Les premières demandes de brevet [5], [6] concernant cette technologie ont été déposées par K. INOUE à la fin des années 1960.

Mais il a fallu attendre la fin des années 1990 pour que la technique de « SPS » prenne un essor expérimental.

Le « SPS » est une technique de frittage qui consiste à appliquer simultanément sur l'échantillon massif ou pulvérulent à densifier, ou sur les pièces à assembler une pression uniaxiale et des impulsions (« pulses ») de courant de forte intensité.

Les poudres ou pièces peuvent être en métal, céramiques ou polymères.

La montée en température est appliquée à l'échantillon par l'intermédiaire d'un montage de plateaux et de pistons en graphite, la poudre est insérée à l'intérieur d'une pastilleuse en graphite. Le montage constitué par la pastilleuse, les pistons et les plateaux est le seul, dans l'enceinte sous vide, à monter en température.

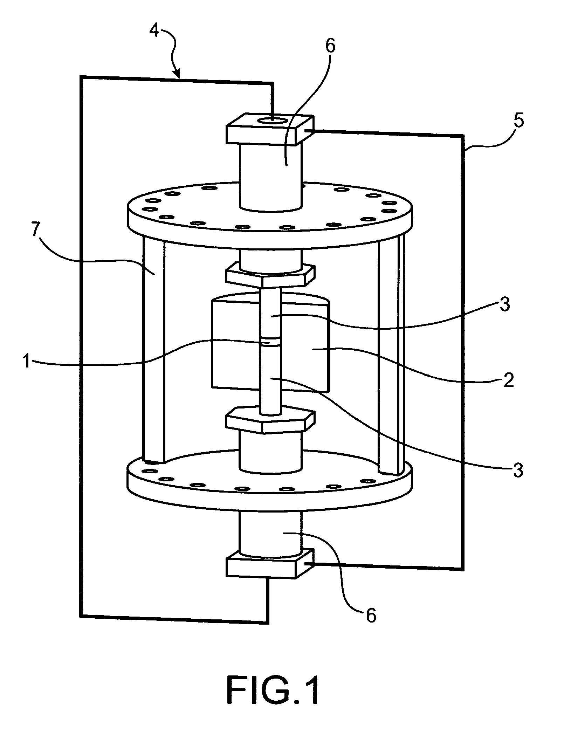

Plus exactement, on a représenté sur la figure 1 le principe de fonctionnement d'un appareil de SPS et ses principaux organes. La poudre (1) est placée dans une chemise en graphite (2), entre deux pistons (3). Une pression (4) est appliquée à ces pistons (3), et un courant continu (5) est appliqué à des électrodes (6). La poudre (1), les pistons (3), la chemise en graphite (2) et une portion des électrodes (6) sont placés à l'intérieur d'une enceinte sous vide (7). En lieu et place de la poudre, on peut placer entre les deux pistons deux pièces à céramique à assembler de façon à avoir dans la matrice la succession piston-1ère céramique-2ème céramique-piston.

La température est suivie par l'intermédiaire d'un pyromètre optique qui pilote également la puissance électrique injectée dans le montage. Les courants utilisés lors du frittage peuvent aller jusqu'à 8000 A.

Le principal intérêt de la technologie « SPS » est la possibilité de densifier les échantillons en des temps relativement courts de l'ordre de quelques minutes, par exemple de 5 à 10 minutes.

La rapidité de frittage permet souvent de minimiser la croissance de grains et d'atteindre pour certains matériaux une densité proche de 100%.

Toutefois, le frittage à chaud avec champ électrique pulsé (« SPS ») a été peu ou pas appliqué aux céramiques réfractaires et n'a pas été appliqué à l'assemblage de deux pièces en céramique réfractaire.

Le document US-B2-6 515 250 concerne un procédé et un appareil pour assembler des pièces, dans lequel dans une première étape on met en contact les surfaces des pièces à assembler sans utiliser une matrice en graphite. Puis on applique un courant pulsé ou une combinaison d'un courant pulsé et d'un courant continu aux dites surfaces tout en appliquant une pression aux pièces de façon à assembler, joindre, temporairement les pièces (« Etape 1 »).

On réalise ensuite un traitement thermique des pièces assemblées temporairement afin de rendre cet assemblage définitif et d'obtenir une résistance du joint équivalente à la résistance du matériau de chacune des pièces assemblées.

Il est précisé que le procédé de ce document permet d'assembler des pièces métalliques entre elles mais aussi une pièce métallique avec une pièce non métallique ou des pièces non métalliques entre elles.

Dans les exemples de ce document, on réalise l'assemblage de barres en matériaux identiques par exemple en acier inoxydable (SUS 304), ou en acier allié à outils (SKD 61).

Il est en outre indiqué que l'assemblage peut être réalisé entre des pièces métalliques en des matériaux différents, par exemple, entre une pièce en SKD 61 et une pièce en alliage d'aluminium, entre une pièce en SUS 304 et une pièce en SUS 420J2, entre une pièce en alliage de cuivre et une pièce en SUS 420J2, et entre une pièce en SKH 51 (acier à outil rapide) et une pièce en SKD 61, et aussi entre une pièce en métal et une pièce non métallique, ou entre des pièces non métalliques, sans utiliser des matériaux de soudage ou des métaux de brasure.

Il est également précisé que lorsque ce procédé est utilisé pour l'assemblage de pièces en des matériaux différents par exemple métal, et céramique ou plastique, une pièce ayant des caractéristiques de gradient c'est-à-dire présentant une variation graduelle de ses propriétés d'un côté à l'autre de la pièce est placé entre les pièces à assembler.

Enfin, il est mentionné que le procédé de ce document peut être appliqué à « divers types d'assemblages » par exemple l'assemblage d'un métal ultra-dur et d'un métal normal, ou l'assemblage d'une pièce en aluminium et d'une pièce résistante à la corrosion et à l'usure.

En conclusion, ce document ne décrit ni ne suggère l'assemblage de deux pièces en céramiques et encore moins de deux pièces en céramiques réfractaires entre elles, et n'évoque pas les problèmes particuliers posés par l'assemblage de deux céramiques, en particulier de deux céramiques réfractaires.

De plus, l'assemblage (étape 1) est réalisé sans matrice graphite. Or, les céramiques n'étant pas de bons conducteurs électriques, il est impossible que les impulsions « pulses » de courant traversent des céramiques à assembler. Cette première étape ne peut donc fonctionner que pour des métaux ou plus généralement des matériaux conducteurs de courant.

En outre, l'assemblage par courant pulsé qui s'apparente au « SPS » ne constitue qu'une étape intermédiaire conduisant à un assemblage temporaire, le traitement thermique consécutif à cette étape est absolument nécessaire pour assurer la bonne cohésion de l'interface.

En fait, on peut considérer que dans le procédé de ce document la première étape ne constitue qu'un simple positionnement des pièces et qu'aucun véritable assemblage n'est obtenu.

Le document US-B1-6 384 365 décrit un procédé de consolidation ou de réparation de pièces de turbine telles que des aubes de turbine par la technique de frittage à chaud avec champ électrique pulsé (« SPS »).

L'aube peut être en un superalliage de cobalt classique ou en un superalliage à base de nickel monocristallin.

Si les aubes sont recouvertes d'une couche de fond par exemple en MCrAlY et/ou d'un revêtement externe de barrière thermique en céramique, tel qu'un revêtement en zircone stabilisée, ce revêtement doit être complètement éliminé. Il est précisé que lorsque les surfaces opposées à assembler de la pièce de turbine sont en un matériau céramique, une poudre céramique est alors disposée entre ces surfaces opposées. Aucun exemple de réalisation n'est donné, en particulier concernant l'assemblage de deux pièces en céramique, notamment en céramique réfractaire.

La durée du traitement de « SPS » est de moins de 5 minutes à une température inférieure à 1500°C.

En conclusion, dans ce document, pour réaliser l'assemblage de céramiques il est obligatoire d'utiliser une troisième phase intercalaire comme dans les procédés de brasure décrits plus haut.

En outre, ce document ne décrit ni n'évoque l'assemblage de céramiques réfractaires, en effet la température de 1300°C est insuffisante pour assembler les céramiques réfractaires, par exemple de type carbures ou nitrures.

Il existe donc au vu de ce qui précède, un besoin pour un procédé d'assemblage par frittage à chaud avec champ électrique pulsé (« SPS »), de pièces en céramique, qui permette d'assembler des pièces en céramique réfractaire, à savoir présentant une température de frittage supérieure à 1900°C.

Il existe encore un besoin pour un tel procédé qui permette l'assemblage de ces pièces de manière simple, fiable, rapide, peu coûteuse et qui permette d'obtenir une liaison, un assemblage d'une grande cohésion, d'une grande résistance.

Le but de l'invention est de fournir un procédé d'assemblage de pièces en céramique par frittage à chaud avec champ électrique pulsé (« SPS ») qui réponde entre autre à ce besoin et qui ne présente pas les inconvénients, défauts, limitations et désavantages des procédés de l'art antérieur et qui résolve les problèmes des procédés de l'art antérieur.

Ce but, et d'autres encore, sont atteints, conformément à l'invention par un procédé d'assemblage par frittage à chaud avec champ électrique pulsé, d'au moins deux pièces en céramique réfractaire, chacune des pièces présentant au moins une surface à assembler, dans lequel on réalise les étapes successives suivantes :
- on met en contact les surfaces à assembler des pièces sans ajout d'aucune sorte entre lesdites surfaces, puis ;
- on applique une pression, dite pression d'assemblage, de 1 à 200 MPa (ou 2000 bars) auxdites pièces ;
- on applique un courant électrique pulsé d'une intensité de 500 à 8000 A auxdites pièces de façon à élever la température des pièces jusqu'à une température, dite température d'assemblage, d'au moins 1300°C, puis ;
- on cesse d'appliquer le courant électrique, simultanément on cesse d'appliquer la pression, et on refroidit les pièces,
- on récupère les pièces assemblées.

Le procédé selon l'invention se distingue fondamentalement des procédés d'assemblage de pièces en céramique de l'art antérieur.

Le procédé selon l'invention comporte un nombre limité d'étapes, simples, faciles à mettre en oeuvre.

Grâce au procédé de l'invention, un assemblage définitif, ou liaison cohésive, d'une grande résistance est obtenu en une seule opération par un procédé de SPS sans qu'il soit nécessaire d'avoir recours à une étape supplémentaire de traitement thermique pour obtenir l'assemblage définitif, solide, cohésif.

Le procédé selon l'invention permet donc de réaliser d'importantes économies de temps et d'énergie.

Le procédé de l'invention ne nécessite aucun ajout de matériau quel qu'il soit, par exemple de poudre, à l'interface des pièces à assembler. On évite ainsi la présence d'une deuxième ou troisième phase à l'interphase avec tous les problèmes qui en résulte.

Il a été mis en évidence selon l'invention que la sélection de plages spécifiques de certains paramètres opératoires du procédé « SPS » permettait de manière étonnante d'assembler pour la première fois de manière cohésive et forte des céramiques réfractaires, c'est-à-dire possédant des températures de frittage supérieures à 1300°C, en utilisant uniquement un procédé « SPS », en une seule étape, sans aucun traitement notamment thermique consécutif et sans aucun ajout à l'interface.

Ainsi, la pression appliquée est selon l'invention généralement de 1 à 200 MPa et l'intensité appliquée est généralement de 500 à 8000 A. On réalise donc une double sélection concernant d'une part la plage de pression et d'autre part la plage d'intensité.

Il n'y a aucune mention, ni aucune suggestion dans l'art antérieur que cette double sélection pouvait permettre un assemblage solide, sans traitement supplémentaire, de céramiques spécifiquement réfractaires, d'autant plus que l'assemblage de pièces en céramique réfractaire n'est pas explicitement décrit dans l'art antérieur et que les problèmes inhérents à l'assemblage de ces céramiques ne sont pas évoqués.

De préférence, la pression est de 10 à 150 MPa, de préférence encore de 20 à 100 MPa, mieux de 50 à 75 MPa.

De préférence, l'intensité est de 500 à 6000 A, de préférence encore de 1000 à 3000 A.

Les valeurs de pression et d'intensité sont choisies à l'intérieur des plages spécifiques ci-dessus de façon à ce que la température des pièces à assembler s'élève au-delà de 1300°C, de préférence à de 1400 à 2000°C, de préférence encore à de 1600 à 1950°C, par exemple à 1750°C.

La durée pendant laquelle est maintenue ladite température (encore appelée température de palier ou d'assemblage) par exemple de 1750°C, durée que l'on peut nommer aussi temps de palier est généralement de 0 à 10 minutes, de préférence de 0 à 7 minutes, par exemple de 5 minutes.

Lorsque le temps est égal à 0, cela signifie que l'on effectue une montée en température jusqu'à la température maximale et que l'on redescend à la température ambiante sans qu'un palier soit observé.

On notera que cette durée de palier est dans tous les cas très faible, au regard des autres méthodes de frittage, et que, de même, le temps de cycle en durée globale, totale du procédé est réduit. Ce temps de cycle est par exemple de 10 à 30 minutes, notamment de 20 minutes, ce qui constitue un autre avantage du procédé selon l'invention.

Le refroidissement des pièces est généralement effectué de manière pas trop brutale comme peut le comprendre l'homme du métier dans ce domaine de la technique. Ainsi, on observera généralement une vitesse de refroidissement de 80 à 600°C par minute, par exemple de 100 à 200°C/minute depuis le palier de température.

De préférence, le refroidissement est effectué par rampes successives présentant des pentes différentes, ainsi le refroidissement peut s'effectuer par exemple comme suit : 600°C min⁻¹ pendant la 1ère minute, puis 100°C min⁻¹ jusqu'à 600°C et 40°C min⁻¹ jusqu'à l'ambiante.

Il est possible de mettre en contact les pièces puis d'appliquer la pression et ensuite d'appliquer, tout en maintenant la pression, le courant électrique pulsé aux pièces pour élever la température des pièces.

Avantageusement, les paramètres de température et donc d'intensité, et de pression (ou de force appliquée, la pression dépendant de la surface d'appui suivant la relation bien connue P = F/S)ne sont pas, depuis la température ambiante et une pression de 0 MPa, appliqués de manière brutale, instantanée, mais sont élevés de manière progressive depuis la température ambiante et une pression de 0 MPa.

Pour la température (régie par l'intensité) on réalisera ainsi de préférence une montée progressive avec une rampe, ou plusieurs rampes présentant éventuellement des pentes différentes pour arriver jusqu'à la température maximale mentionnée plus haut, encore appelée température de palier ou d'assemblage.

La ou lesdites rampes de température ont préférentiellement une pente de 50° C à 200° C/min, par exemple de 100° C/min.

Pour la pression, on pourra, de la même manière, avantageusement réaliser une montée progressive avec une rampe, ou plusieurs rampes présentant éventuellement des pentes différentes, pour arriver jusqu'à la pression maximale indiquée plus haut, encore appelée pression de palier ou d'assemblage.

La ou lesdites rampes de pression ont généralement une pente de 1 MPa/min à 20 MPa/min, de préférence de 5 à 10 MPa/min.

La montée en température et la montée en pression qu'elles soient (de préférence) progressives ou non, peuvent se faire avantageusement de manière simultanée, concommitante, en une même durée.

Si plusieurs rampes de pression et plusieurs rampes de température sont réalisées, les rampes de pression et de température correspondantes ont de préférence la même durée.

En appliquant les paramètres de température (et donc d'intensité) et/ou de pression (et donc de force appliquée) de manière progressive et non de manière brutale, soudaine, instantanée, on évite ainsi de soumettre les pièces en céramique réfractaire à des contraintes trop fortes et aucune cassure des pièces en céramique n'est à déplorer.

De manière particulièrement étonnante, il a été mis en évidence par les inventeurs que les résultats étaient meilleurs et l'assemblage obtenu d'encore meilleure qualité si l'on appliquait la pression (ou force) nécessaire pour réaliser l'assemblage uniquement après une montée en température significative depuis la température ambiante, généralement jusqu'à une température permettant aux surfaces à assembler d'être ramollies, d'être plus molles, sous l'effet de cette température.

Cette température à laquelle se produit un ramollissement est une température qui est inférieure à la température de palier, d'assemblage, définie plus haut mais qui doit être suffisante pour permettre ledit ramollissement ; généralement cette température est inférieure de 50 à 300° C, de préférence de 100 à 250° C, de préférence encore de 150 à 200° C, à la température de palier, d'assemblage, définie plus haut.

Le ramollissement des surfaces en contact sous l'effet de la température permet aux surfaces de mieux se comporter lors de l'assemblage.

Par exemple dans le cas où ladite température de palier est de 1750° C, on élève progressivement la température des pièces jusqu'à environ 1600° C, de préférence par deux rampes de températures successives, et l'on élève de même progressivement la pression (force) appliquée aux pièces de façon à ce que la pression (ou pression de palier) permettant l'assemblage effectif des pièces, à savoir une pression de 75,6 MPa (pour une force appliquée de 3,8 kN sur des surfaces à assembler de 8 mm de diamètre), soit appliquée seulement lorsque la température des pièces a atteint 1600° C.

A titre d'exemple, une montée en température, depuis la température ambiante (généralement 20 à 25° C) jusqu'à 1750° C, pourra s'effectuer de la manière suivants :
- température ambiante à 600° C : 3 minutes ;
- 600 à 1600° C : 10 minutes ;
- 1600 à 1750° C : 3 minutes ;
- maintien à 1750° C pendant 5 minutes.

Pendant le même temps, la pression évolue de la manière suivante :
- 0 à 19,9 MPa : 13 minutes ;
- 19,9 MPa à 75,6 MPa : 3 minutes ;
- maintien à 75,6 MPa pendant 5 minutes.

La surface à assembler a un diamètre de 8 mm (S = 5.10⁻⁵ m²) et les pressions de 19,9 MPa et 75,6 MPa correspondent respectivement à des forces appliquées de 1 kN et de 3,8 kN.

Les montées progressives en température et en pression décrites plus haut, notamment dans le mode de réalisation préféré de ces montées en température, (où l'on met en oeuvre un chauffage intermédiaire jusqu'à une température de ramollissement), mentionné ci-dessus, permettent avec certitude d'éviter d'avoir recours à une étape thermique supplémentaire, comme c'est le cas dans l'art antérieur, pour obtenir l'assemblage définitif, d'obtenir ainsi directement en une seule étape l'assemblage, et d'améliorer encore plus la qualité de l'assemblage excellent des deux pièces, avec aucune surface visible à l'interface.

Il semblerait en outre que la géométrie des « trains » d'impulsion de courant ait également une influence sur la qualité de l'interface de l'assemblage obtenu.

Le courant est appliqué sous forme de séries, trains d'impulsions (« pulses ») ; chaque série, train, est constituée d'un nombre déterminé et réglable de « pulses ». Les séries (trains) sont séparées entre elles par un temps pendant lequel le courant appliqué est nul.

Dans le procédé selon l'invention, on utilise généralement des impulsions de 1 à 5 ms, par exemple de 3,3 ms de période, assemblées généralement par train de 1 à 15, par exemple 12 impulsions, chaque train étant généralement séparé par 1 à 15 périodes, par exemple 3 périodes, de la durée (telle que 3,3 ms) ci-dessus, sans courant.

Il est possible de changer ces valeurs mais le courant doit toujours garder la même géométrie : à savoir des trains d'impulsions plus ou moins nombreux séparés par des périodes variables sans courant.

La tension appliquée est de quelques volts, généralement de 1 à 8 volts, de préférence de 2 à 7 volts, typiquement 5 volts.

Les pièces à assembler peuvent être toutes en la même céramique réfractaire ou bien les pièces peuvent être en une céramique réfractaire différente.

La ou les céramiques réfractaires peuvent être choisies parmi les céramiques carbures, nitrures, et oxydes. Des exemples de ces céramiques sont le SiC, le TiN, le ZrC ou le TiC.

Le procédé selon l'invention trouve son application dans tous les domaines où l'on souhaite réaliser des assemblages céramique/céramique en vue de fabriquer des formes complexes à microstructure contrôlée par un procédé rapide, universel et peu onéreux.

Le procédé selon l'invention permet l'élaboration de matériaux dans des domaines aussi divers que les matériaux de structure des coeurs des réacteurs de Génération IV, l'assemblage des combustibles du futur, l'assemblage des piles à combustible et l'obtention de matériaux de microstructure nanométrique, domaines dans lesquels l'assemblage des pièces en céramique réfractaire se heurtait jusqu'alors à une barrière, un verrou technologique insurmontable.

D'autres caractéristiques et avantages de l'invention ressortiront mieux à la lecture de la description qui va suivre, donnée à titre illustratif et non limitatif en référence aux figures annexées dans lesquelles :
- la figure 1 est une vue schématique en coupe verticale d'un exemple d'appareil de SPS pour la mise en oeuvre du procédé selon l'invention ;
- les figures 2A à 2D sont des micrographies réalisées au microscope électronique à balayage (MEB) d'assemblages de pièces en SiC obtenues par le procédé selon l'invention après découpe et polissage ;
- les figures 3A à 3D sont des micrographies réalisées au microscope électronique à balayage (MEB) des assemblages de pièces en SiC des figures 2A à 2D, après attaque, traitement, thermique (« TT ») à 1550°C pendant 5 heures sous Argon 6,0 ;
- les figures 4A et 4B sont des micrographies réalisées au microscope électronique à balayage (MEB) d'assemblages de pièces en TiN obtenus par le procédé selon l'invention, après découpe et polissage.

Le procédé selon l'invention est généralement mis en oeuvre dans une machine, dispositif de frittage à chaud par champ électrique pulsé (« SPS ») classique, tel que par exemple celui décrit sur la figure 1.

Le procédé selon l'invention consiste généralement tout d'abord à placer les deux pièces ou plus à assembler dans un appareil de SPS, à l'intérieur de la matrice en graphite de celui-ci.

Les pièces à assembler sont en général au nombre de deux, mais on peut aussi assembler simultanément un plus grand nombre de pièces pouvant aller par exemple jusqu'à 100.

Par pièce en céramique réfractaire, on entend généralement tout élément ou entité de forme quelconque, de préférence de forme simple, entrant par exemple, après assemblage avec une ou plusieurs autres pièces dans des structures de plus grandes dimensions, de préférence de forme plus complexe. Grâce au procédé selon l'invention, il est possible d'obtenir, après assemblage, des pièces même de forme très complexe en une durée courte et avec tous les avantages inhérents au procédé de l'invention. La taille des pièces assemblées obtenues n'est limitée que par la capacité de l'appareil de « SPS » qui est bien connue de l'homme du métier.

Les deux pièces ou plus à assembler peuvent être en une même céramique ou bien chacune des pièces à assembler peut être en une céramique différente.

On met ensuite en contact les surfaces à assembler et ce sans qu'aucun ajout d'aucune sorte ne soit placé entre ces surfaces.

Les surfaces à assembler peuvent être des surfaces de type poli miroir ou bien des surfaces rugueuses, brutes d'usinage. Généralement les surfaces à assembler sont dégraissées au préalable dans un solvant organique par exemple du type cétone, ester, éther, alcool, ou un mélange de ceux-ci, etc..., puis séchées, puis généralement on applique une pression de 1 à 150 MPa auxdites pièces. En d'autres termes, on établit un contact par pression entre les deux surfaces en regard à assembler.

Généralement, on applique ensuite, tout en maintenant la pression, un courant électrique pulsé d'une intensité de 500 à 8000 A auxdites pièces de façon à élever la température des pièces jusqu'à au moins 1300°C.

En d'autres termes, lorsque tout est en contact on peut générer un courant électrique afin de créer l'élévation de température. De manière générale, l'ampérage maximal que peut supporter une matrice est lié notamment à son diamètre. Ainsi, pour un diamètre d'échantillon de 8 mm, on peut appliquer 2000 A sans risquer de détériorer la matrice. Pour des diamètres plus importants tels que 20 mm, on peut appliquer 4000 A ou plus. Une fois que l'assemblage est réalisé on cesse d'appliquer le courant électrique ainsi que la pression, et on refroidit les pièces, généralement jusqu'à la température ambiante, par exemple de 20 à 25°C. On récupère les pièces réalisées dans l'appareil de « SPS ».

L'invention va maintenant être décrite en référence aux exemples suivants, donnés à titre illustratif et non limitatif.

### EXEMPLES

Dans ces exemples, on assemble par SPS, selon le procédé de l'invention des pièces en SiC ou en TiN qui sont des disques d'un diamètre de 8 mm et d'une épaisseur de 5 mm. Pour chaque matériau SiC ou TiN, six échantillons assemblés ont été fabriqués.

L'appareil de « SPS » utilisé est un appareil de type « SPS 2080 » commercialisé par la société SUMITOMO.

### Exemple 1

- Dans cet exemple, on assemble deux pièces (disques) de SiC dans l'appareil mentionné ci-dessus et dans les conditions suivantes :
   - température de 1800°C pendant 5 minutes et sous 50 MPa ;
   - train d'impulsions : 3,2 ms.
- Caractérisation des échantillons de SiC obtenus après assemblage
   - Observation optique

Les échantillons obtenus présentent une bonne cohésion. L'observation visible ne révèle pas de défauts.

### - Contrôles destructifs

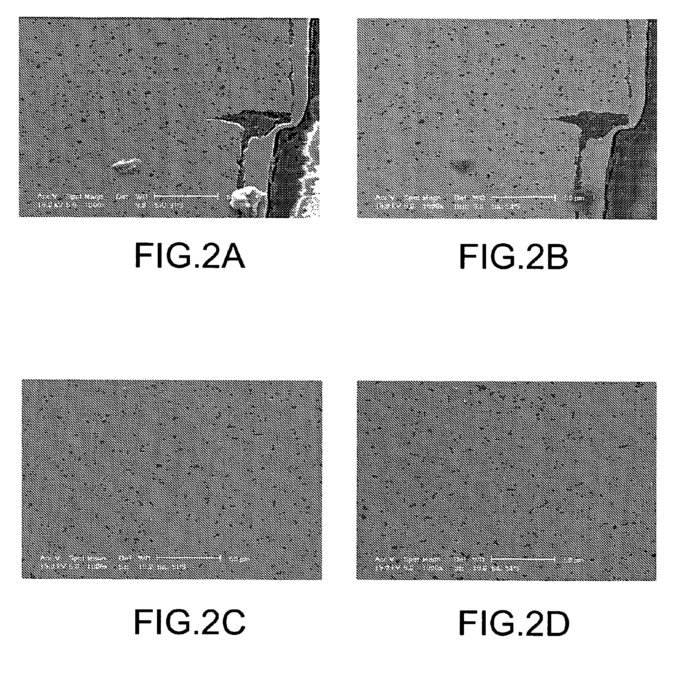

On réalise une observation au Microscope Electrique à Balayage de l'échantillon après découpe et polissage. Les figures 2A à 2D présentent des micrographies de l'échantillon, obtenus sur des surfaces polies après préparation métallographique.

L'observation des bords de l'échantillon a permis de définir l'interface initiale qui correspond à l'écart de positionnement des deux pastilles SiC (figure 2A).

La surface du SiC présente une forte porosité répartie de façon homogène (figure 2C), la visualisation de la zone interfaciale est similaire (figure 2D) et il n'a pas été possible de mettre en évidence l'interface initiale.

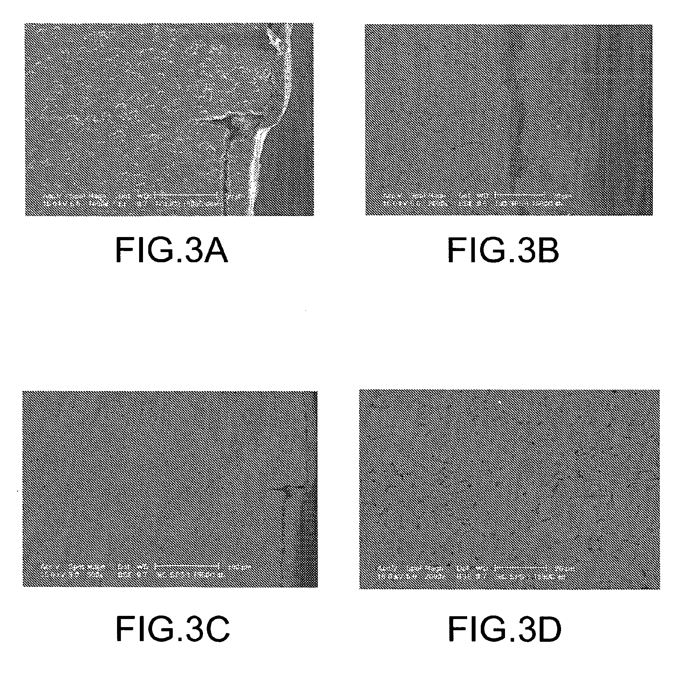

L'observation de la microstructure après attaque thermique (1550°C, 5 heures sous Ar 6.0 est présentée dans les figures 3. La figure 3A est à comparer à la figure 2A. Malgré l'attaque thermique, l'interface est peu visible. Ceci est confirmé par les figures 3C et 3D : aucune modification de porosité ou de taille de grains n'est à signaler à l'interface.

### Exemple 2

Dans cet exemple, on assemble deux pièces (disques) de TiN dans l'appareil mentionné ci-dessus et dans les conditions suivantes :
- température de 1500°C pendant 5 secondes et sous 10 MPa ;
- train d'impulsions : 3,2 ms.

- Caractérisation des échantillons de TiN obtenus après assemblage

### - Observation optique

Les échantillons obtenus présentent une bonne cohésion. L'observation visuelle ne révèle pas de défauts.

### - Contrôles destructifs

On réalise une observation au microscope électronique à balayage de l'échantillon après découpe et polissage.

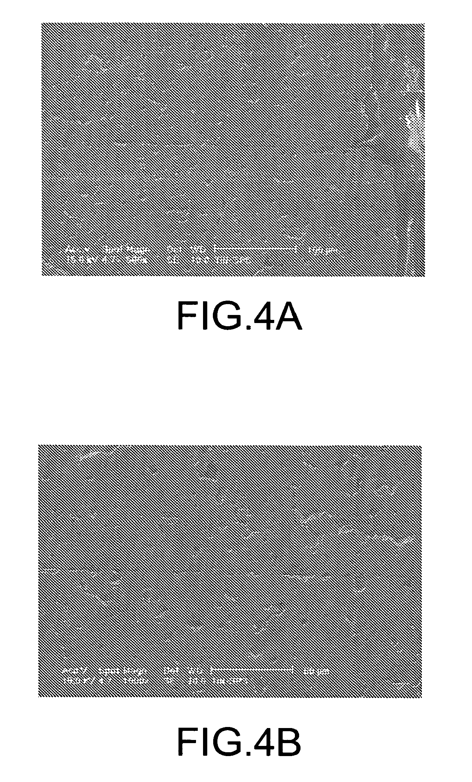

Les figures 4A et 4B présentent des micrographies de l'échantillon, obtenues sur les surfaces polies après préparation métallographique. La liaison est visible et présente quelques défauts : porosité ou arrachements de grains. Elle est cependant cohésive avec des grains qui forment la liaison.

### Conclusion

Les échantillons de SiC et de TiN assemblés par SPS selon le procédé de l'invention présentent des interfaces cohésives sans modification des microstructures.

### REFERENCES

[1] FR-A-2 749 787
[2] FR-A-2 748 471
[3] FR-A-2 728 561
[4] FR-A-2 707 196
[5] US-A-3 241 956 K. Inoue 1966
[6] US-63 250 892 K. Inoue 1966

## Revendications

1. Procédé d'assemblage par frittage à chaud avec un champ électrique pulsé, d'au moins deux pièces en céramique réfractaire, chacune des pièces présentant au moins une surface à assembler par frittage à chaud avec champ électrique pulsé, dans lequel on réalise les étapes suivantes :
- on met en contact les surfaces à assembler des pièces sans ajout d'aucune sorte entre lesdites surfaces, puis ;
- on applique une pression, dite pression d'assemblage, de 1 à 200 MPa auxdites pièces ;
- on applique un courant électrique pulsé d'une intensité de 500 à 8000 A auxdites pièces de façon à élever la température des pièces jusqu'à une température, dite température d'assemblage, d'au moins 1300°C, puis ;
- on cesse d'appliquer le courant électrique, simultanément on cesse d'appliquer la pression, et on refroidit les pièces,
- on récupère les pièces assemblées.

2. Procédé selon la revendication 1 dans lequel on applique une pression de 10 à 150 MPa, de préférence de 20 à 100 MPa, mieux de 50 à 75 MPa.

3. Procédé selon l'une quelconque des revendications précédentes, dans lequel on applique un courant électrique pulsé d'une intensité de 500 à 6000 A, de préférence de 1000 à 3000 A.

4. Procédé selon l'une quelconque des revendications précédentes, dans lequel la température des pièces à assembler s'élève à de 1400 à 2000°C, de préférence à de 1600 à 1950°C, par exemple à 1750° C.

5. Procédé selon l'une quelconque des revendications précédentes, dans lequel la température d'au moins 1300°C est maintenue pendant une durée de 0 à 10 minutes, de préférence de 0 à 7 minutes, par exemple de 5 minutes.

6. Procédé selon l'une quelconque des revendications précédentes, dans lequel la durée totale du procédé est de 10 à 30 minutes, notamment de 20 minutes.

7. Procédé selon l'une quelconque des revendications précédentes, dans lequel les pièces sont refroidies à une vitesse de 80°C à 600°C/minute.

8. Procédé selon l'une quelconque des revendications précédentes, dans lequel la pression et la température sont élevées de manière progressive depuis la température ambiante et une pression de 0 MPa.

9. Procédé selon la revendication 8, dans lequel la température est élevée en réalisant une rampe, ou plusieurs rampes présentant éventuellement des pentes différentes, pour arriver jusqu'à la température d'assemblage.

10. Procédé selon la revendication 9, dans lequel la ou lesdites rampes ont une pente de 50° C à 200° C/min par exemple de 100° C/min.

11. Procédé selon la revendication 8, dans lequel la pression est élevée en réalisant une rampe, ou plusieurs rampes présentant éventuellement des pentes différentes, pour arriver jusqu'à la pression d'assemblage.

12. Procédé selon la revendication 11, dans lequel la ou lesdites rampes ont une pente de 1 MPa/min à 20MPa/min, de préférence de 5 à 10 MPa/min.

13. Procédé selon l'une quelconque des revendications 8 à 12, dans lequel la température et la pression sont élevées de manière simultanée en une même durée.

14. Procédé selon la revendication 13, selon lequel plusieurs rampes de pression et plusieurs rampes de température sont réalisées, les rampes de pression et de température correspondantes ayant la même durée.

15. Procédé selon l'une quelconque des revendications 8 à 14, selon lequel on applique la pression d'assemblage après une montée en température jusqu'à une température permettant aux surfaces à assembler d'être ramollies.

16. Procédé selon la revendication 15, dans lequel la température permettant aux surfaces à assembler d'être ramollies, est inférieure de 50 à 300° C , de préférence de 100 à 250° C, mieux de 150 à 200° C à la température d'assemblage.

17. Procédé selon l'une quelconque des revendications précédentes, dans lequel le courant électrique pulsé est appliqué sous la forme d'impulsions de 1 à 5 ms, par exemple de 3,3 ms de période, assemblées par trains de 1 à 15, par exemple de 12 impulsions, chaque train étant séparé par de 1 à 15 périodes, par exemple par 3 périodes.

18. Procédé selon l'une quelconque des revendications précédentes, dans lequel on assemble de 2 à 100 pièces.

19. Procédé selon l'une quelconque des revendications précédentes, dans lequel toutes les pièces à assembler sont en une même céramique réfractaire.

20. Procédé selon l'une quelconque des revendications précédentes, dans lequel les pièces à assembler sont en une céramique différente.

21. Procédé selon l'une quelconque des revendications précédentes, dans lequel la ou les céramiques réfractaires sont choisies parmi les céramiques carbures, nitrures et oxydes.

22. Procédé selon la revendication 21, dans lequel la ou les céramiques réfractaires sont choisis parmi SiC, TiN, ZrC et TiC.

## Claims

1. Process for joining, by spark plasma sintering, at least two refractory ceramic parts, each of the parts having at least one surface to be joined by spark plasma sintering, in which the following steps are carried out:
- the surfaces to be joined of the parts are brought into contact without addition of any sort between said surfaces; then
- a pressure, known as the joining pressure, of 1 to 200 MPa is applied to said parts;
- a pulsed electric current having an intensity of 500 to 8000 A is applied to said parts so as to raise the temperature of the parts to a temperature, known as the joining temperature, of at least 1300°C; then
- the electric current ceases to be applied, simultaneously the pressure ceases to be applied, and the parts are cooled; and
- the joined parts are recovered.

2. Process according to Claim 1, in which a pressure of 10 to 150 MPa, preferably 20 to 100 MPa, better 50 to 75 MPa, is applied.

3. Process according to either one of the preceding claims, in which a pulsed electric current having an intensity of 500 to 6000 A, preferably 1000 to 3000 A, is applied.

4. Process according to any one of the preceding claims, in which the temperature of the parts to be joined is raised to 1400 to 2000°C, preferably to 1600 to 1950°C, for example to 1750°C.

5. Process according to any one of the preceding claims, in which the temperature of at least 1300°C is maintained for a duration of 0 to 10 minutes, preferably 0 to 7 minutes, for example 5 minutes.

6. Process according to any one of the preceding claims, in which the total duration of the process is from 10 to 30 minutes, in particular 20 minutes.

7. Process according to any one of the preceding claims, in which the parts are cooled at a rate of 80°C to 600°C/minute.

8. Process according to any one of the preceding claims, in which the pressure and the temperature are gradually raised from ambient temperature and a pressure of 0 MPa.

9. Process according to Claim 8, in which the temperature is raised by carrying out a ramp, or several ramps optionally having different slopes, to arrive at the joining temperature.

10. Process according to Claim 9, in which the ramp or said ramps has (have) a slope of 50°C to 200°C/min, for example 100°C/min.

11. Process according to Claim 8, in which the pressure is raised by carrying out a ramp, or several ramps optionally having different slopes, to arrive at the joining pressure.

12. Process according to Claim 11, in which the ramp or said ramps has (have) a slope of 1 MPa/min to 20 MPa/min, preferably 5 to 10 MPa/min.

13. Process according to any one of Claims 8 to 12, in which the temperature and the pressure are raised simultaneously over a same duration.

14. Process according to Claim 13, according to which several pressure ramps and several temperature ramps are carried out, the corresponding pressure and temperature ramps having the same duration.

15. Process according to any one of Claims 8 to 14, according to which the joining pressure is applied after a rise in temperature up to a temperature that enables the surfaces to be joined to be softened.

16. Process according to Claim 15, in which the temperature that enables the surfaces to be joined to be softened, is 50 to 300°C, preferably 100 to 250°C, better 150 to 200°C below the joining temperature.

17. Process according to any one of the preceding claims, in which the pulsed electric current is applied in the form of pulses having a period of 1 to 5 ms, for example having a period of 3.3 ms, joined by trains of 1 to 15, for example 12 pulses, each train being separated by 1 to 15 periods, for example by 3 periods.

18. Process according to any one of the preceding claims, in which 2 to 100 parts are joined.

19. Process according to any one of the preceding claims, in which all the parts to be joined are made of one and the same refractory ceramic.

20. Process according to any one of the preceding claims, in which the parts to be joined are made of a different ceramic.

21. Process according to any one of the preceding claims, in which the refractory ceramic (s) is (are) chosen from the carbide, nitride and oxide ceramics.

22. Process according to Claim 21, in which the refractory ceramic (s) is (are) chosen from SiC, TiN, ZrC and TiC.

## Patentansprüche

1. Verfahren zum Zusammenbauen von wenigstens zwei Teilen aus feuerfester Keramik durch Heißsinterung mittels eines gepulsten elektrischen Feldes, wobei jedes der Teile wenigstens eine Fläche für den Zusammenbau durch Heißsinterung mittels gepulstem elektrischem Feld aufweist, bei dem die folgenden Schritte realisiert werden :
- man bringt die zusammenzubauenden Flächen der Teile in Kontakt, ohne jegliche Einfügung zwischen den genannten Flächen ;
- man wendet auf die genannten beiden Teile einen Druck von 1 bis 200 MPa an, Zusammenbaudruck genannt;
- man leitet einen gepulsten elektrischen Strom mit einer Stärke von 500 bis 8000 A durch die beiden genannten Teile, um die Temperatur der Teile bis auf eine Temperatur von wenigstens 1300 °C, Zusammenbautemperatur genannt, zu erhöhen ;
- man beendet die Stromdurchleitung; simultan beendet man die Druckanwendung, und man kühlt die Teile ab ;
- man bekommt die zusammengebauten Teile.

2. Verfahren nach Anspruch 1, bei dem man einen Druck von 10 bis 150 MPa, vorzugsweise 20 bis 100 MPa, noch besser 50 bis 75 MPa anwendet.

3. Verfahren nach einem der vorhergehenden Ansprüche, bei dem man einen gepulsten elektrischen Strom mit einer Stärke von 500 bis 6000 A, vorzugsweise von 1000 bis 3000 A durchleitet.

4. Verfahren nach einem der vorhergehenden Ansprüche, bei dem sich die Temperatur der zusammenzubauenden Teile auf 1400 bis 2000 °C, vorzugsweise 1600 bis 1950 °C, beispielsweise 1750 °C erhöht.

5. Verfahren nach einem der vorhergehenden Ansprüche, bei dem die Temperatur von wenigstens 1300 °C für eine Dauer von 0 bis 10 Minuten, vorzugsweise 0 bis 7 Minuten, zum Beispiel 5 Minuten, aufrecht erhalten wird.

6. Verfahren nach einem der vorhergehenden Ansprüche, bei dem die Gesamtdauer des Verfahrens 10 bis 30 Minuten beträgt, insbesondere 20 Minuten.

7. Verfahren nach einem der vorhergehenden Ansprüche, bei dem die Teile abgekühlt werden mit einer Geschwindigkeit von 80 °C bis 600 °C/min.

8. Verfahren nach einem der vorhergehenden Ansprüche, bei dem der Druck und die Temperatur ab der Umgebungstemperatur und einem Druck von 0 MPa progressiv erhöht werden.

9. Verfahren nach Anspruch 8, bei dem, um auf die Zusammenbautemperatur zu kommen, die Temperatur gemäß einer Rampe oder mehreren, eventuell unterschiedliche Neigungen aufweisenden Rampen erhöht wird.

10. Verfahren nach Anspruch 9, bei dem die Rampe oder die Rampen eine Neigung von 50 °C bis 200 °C /min, zum Beispiel 100 °C/min aufweisen.

11. Verfahren nach Anspruch 8, bei dem, um den Zusammenbaudruck zu erreichen, der Druck mittels einer oder mehrerer Rampen mit eventuell unterschiedlichen Neigungen erhöht wird.

12. Verfahren nach Anspruch 11, bei dem die Rampe oder die Rampen einen Neigung von 1 MPa/min bis 20 MPa/min, vorzugsweise 5 bis 10 MPa/min haben.

13. Verfahren nach einem der Ansprüche 8 bis 12, bei dem die Temperatur und der Druck simultan und mit gleicher Dauer erhöht werden.

14. Verfahren nach Anspruch 13, bei dem mehrere Druckrampen und Temperaturrampen realisiert werden, wobei die entsprechende Druck- und Temperaturrampen die gleiche Dauer haben.

15. Verfahren nach einem der Ansprüche 8 bis 14, bei dem der Zusammenbaudruck nach einem Temperaturanstieg auf eine die Erweichung der zusammenzubauenden Flächen ermöglichende Temperatur angewendet wird.

16. Verfahren nach Anspruch 15, bei dem die die Erweichung der zusammenzubauenden Flächen ermöglichende Temperatur um 50 bis 300 °C, vorzugsweise 100 bis 250 °C, noch besser 150 bis 200 °C niedriger ist als die Zusammenbautemperatur.

17. Verfahren nach einem der vorhergehenden Ansprüche, bei dem der gepulste elektrische Strom angewandt wird in Form von Impulsen mit einer Periodendauer von 1 bis 5 ms, zum Beispiel 3,3 ms, zusammengesetzt zu Zügen von 1 bis 15, beispielsweise 12 Impulsen, wobei jeder Zug bzw. die Züge durch 1 bis 15 Perioden, beispielsweise 3 Perioden getrennt sind.

18. Verfahren nach einem der vorhergehenden Ansprüche, bei dem man 2 bis 100 Teile zusammenbaut.

19. Verfahren nach einem der vorhergehenden Ansprüche, bei dem alle zusammenzubauenden Teile aus der gleichen feuerfesten Keramik sind.

20. Verfahren nach einem der vorhergehenden Ansprüche, bei dem die zusammenzubauenden Teile aus unterschiedlicher Keramik sind.

21. Verfahren nach einem der vorhergehenden Ansprüche, bei dem die feuerfeste Keramik oder die feuerfesten Keramiken ausgewählt werden unter den Karbid-, Nitrid- und Oxidkeramiken.

22. Verfahren nach Anspruch 21, bei dem die feuerfeste Keramik oder die feuerfesten Keramiken ausgewählt werden unter SiC, TiN, ZrC und TiC.
